# EUROPÄISCHE PATENTSCHRIFT

(11) **EP 0 933 196 B1**
(45) Veröffentlichungstag und Bekanntmachung des Hinweises auf die Patenterteilung: **04.04.2007**
(21) Anmeldenummer: 98122404.1
(22) Anmeldetag: 26.11.1998
(51) Int. Cl.: B32B 27/08, B32B 27/32, B32B 27/36

(54) **Mehrschichtiges Kunststoffverbundmaterial mit einer Sperrschicht aus Polybutylenterephthalat**
Multilayered structural composite materials with polybutylene terephthalate barrier layer
Matériaux composites structuraux avec couche barrière en copolymère de téréphtalate de polybutylène

(30) Priorität: 28.01.1998 DE 19803134
(43) Veröffentlichungstag der Anmeldung: 04.08.1999
(73) Patentinhaber: Basell Polyolefine GmbH, 50389 Wesseling (DE)
(72) Erfinder: Rohde, Wolfgang Dr., 67346 Speyer (DE); Büschges, Ulrich Dr., 67157 Wachenheim (DE); Springholz, Bernhard, 67547 Worms (DE)

(56) Entgegenhaltungen:
- EP-A- 0 365 266
- EP-A- 0 626 256
- WO-A-98/29245
- US-A- 4 397 916
- US-A- 4 612 221
- US-A- 5 474 109
- DATABASE WPI Section Ch, Week 199623 Derwent Publications Ltd., London, GB; Class A32, AN 1996-224684 XP002172580 & JP 08 085174 A (MITSUBISHI CHEM CORP), 2. April 1996 (1996-04-02)

## Beschreibung

Die vorliegende Erfindung bezieht sich auf ein mehrschichtiges Kunststoffverbundmaterial, enthaltend mindestens eine Schicht (A), welche, bezogen auf die Gesamtmasse dieser Schicht, zu mindestens 90 Gew.-% aus Ethylenhomo- oder -copolymeren besteht, mindestens einer Sperrschicht (B), welche im wesentlichen aus Polybutylenterephthalat besteht, sowie der Adhäsion zwischen diesen Schichten dienende Haftvermittlerschichten (C).

Weiterhin bezieht die vorliegende Erfindung sich auf ein Verfahren zur Herstellung solcher Kunststoffverbundmaterialien, Hohlkörper und insbesondere Kunststoffkraftstoffbehälter aus solchen Kunststoffverbundmaterialien.

Polyethylen (PE), insbesondere hochdichtes Polyethylen (PE-HD), eignet sich hervorragend zum Extrusionsblasformen von Hohlkörpern. Solche Hohlkörper sind zur Lagerung und zum Transport flüssiger und fester Stoffe geeignet. Eine besondere Anwendung dieser Hohlkörper ist die Lagerung und der Transport flüssiger Gefahrstoffe. Eine weitere Anwendung ist der Kunststoffkraftstoffbehälter (KKB), wie er in Automobilen für die raum- und gewichtssparende Bevorratung des flüssigen Otto- oder Dieselkraftstoffs eingesetzt wird. Die hohe Zähigkeit und Steifigkeit sowie die gute Verarbeitbarkeit auch zu großvolumigen Behältern begründen die weite Verbreitung des PE-HD als Behälterwerkstoff in den genannten Anwendungen.

Der Hauptnachteil des PE gegenüber herkömmlichen Behälterwerkstoffen wie z.B. Stahl ist dessen hohe Permeabilität für unpolare Flüssigkeiten, wie z.B. Kohlenwasserstoffe oder halogenierte Kohlenwasserstoffe. Zur Verringerung der Kohlenwasserstoffemission aus Automobilen werden deshalb KKB aus PE-HD mit einer Permeationssperrschicht ausgestattet. Diese kann auf rein chemischem Wege durch Behandlung der Innenoberfläche des Behälters mit Schwefeltrioxid (Sulfonierung) oder Fluor (Fluorierung) oder durch Polymerabscheidung in einem Plasma (Plasmapolymerisation) erfolgen. Weitere bekannte Methoden sind die Aufbringung einer Lackschicht auf der Behälterinnenoberfläche oder die Coextrusion des Polyethylens mit einem geeigneten Sperrpolymeren.

Von diesen unterschiedlichen Verfahren hat sich weltweit die Coextrusion mehr und mehr durchgesetzt. Als geeignete Sperrpolymere haben sich heute Polyamid (PA) oder Ethylenvinylalkoholcopolymere (EVOH) durchgesetzt (vergl. W. Daubenbüchel, "Anwendung der Coextrusion beim Extrusionsblasformen", in Kunststoffe, 81, 894 (1991) und "Coextrudierte Kunststoffkraftstoffbehälter", ebenda, 82, 201 (1992)). Dabei eignen sich beide Materialtypen als Sperrschicht zur Reduzierung der Permeation unpolarer Füllgüter wie z.B. Kohlenwasserstoffe, insbesondere Otto- und Dieselkraftstoffe ohne Alkoholzusatz. Polyamid bietet dabei den Vorteil eines vergleichsweise geringen Preises besitzt aber dafür den Nachteil gegenüber alkoholhaltigen, insbesondere Methanol enthaltenden Kraftstoffen im Verbund mit PE keine ausreichende Sperrwirkung zu zeigen. Dagegen besitzt EVOH auch gegenüber alkoholhaltigen Kraftstoffen eine hohe Sperrwirkung, allerdings ist der Einsatz von EVOH aufgrund seines komplizierten Herstellverfahrens weniger wirtschaftlich.

Die Europäische Patentanmeldung EP-A1-0 626 256 beschreibt ein mehrschichtiges Kunststoffverbundmaterial, enthaltend eine Schicht aus Polyethylen, eine Sperrschicht aus Polybutylenterephthalat, und Haftvermittlerschichten aus einem modifiziertem Polyolefin zwischen den beiden. Das modifizierte Polyolefin ist mit einer ungesättigten Carbonsäure oder deren Carbonsäureanhydrid, z. B. einem Maleinsäureanhydrid, modifiziert. Das Polyolefin, das modifiziert wird, kann ein Ethylen-Homopolymer, ein Ethylen/α-Olefin-Copolymer oder Polypropylen sein.

Der vorliegenden Erfindung lag nun die Aufgabe zugrunde, mehrschichtige Kunststoffverbundmaterialien bereitzustellen, welche die genannten Nachteile nicht mehr länger aufweisen und zugleich gute Sperrwirkung für Kraftstoffe zeigen und wirtschaftlich herstellbar sind.

Diese Aufgabe wurde von einem gemäß den beigefügten unabhängigen Ansprüchen mehrschichtigen Kunststoffverbundmaterial, einem Verfahren zu dessen Herstellung, einem Hohlkörper und einem Kunststoffkraftstoffbehälter aus diesen Materialien gelöst.

Das für die Schichten (A) eingesetzte Ethylenhomo- oder Copolymer zeichnet sich vorzugsweise durch eine Schmelzfließrate MFR (190°C, 21,6 kg) von 1 bis 20 g/10 min, insbesondere von 1 bis 12 g/10 min und ganz besonders von 2 bis 7 g/10 min aus. Die Dichte dieses Polymeren liegt zwischen 0,92 und 0,96 g/ccm, insbesondere zwischen 0,935 und 0,957 g/ccm und ganz besonders zwischen 0,94 und 0,957 g/ccm. Dabei handelt es sich im allgemeinen um PE-Homopolymere oder um Ethylen/α-Olefin-Copolymerisate. Der Anteil aller PE-Schichten an der Gesamtverbundschichtdicke beträgt zusammen im allgemeinen 60 bis 98,5 %, vorzugsweise 80 bis 98 %. Handelt es sich bei dem erfindungsgemäßen mehrschichtigen Kunststoffverbundmaterial um einen besonders vorteilhaften 5-Schichtverbund, der noch um eine sechste Regeneratschicht ergänzt werden kann, so weist die PE-Innenschicht üblicherweise einen Anteil von 20 bis 50 %, vorzugsweise 25 bis 35 % der Gesamtverbundschichtdicke auf. Die PE-Außenschicht weist üblicherweise einen Anteil von 1 bis 50 %, vorzugsweise 3 bis 40 % der Gesamtverbundschichtdicke auf.

Die erfindungsgemäßen mehrschichtigen Kunststoffverbundmaterialien enthalten mindestens eine Sperrschicht (B) welche im wesentlichen aus Polybutylenterephthalat besteht. Dieses Polybutylenterephthalat weist vorzugsweise eine Schmelzvolumenfließrate MVR (250°C/2,16 kg) von 3 bis 60 ml/10 min, insbesondere von 5 bis 40 ml/10 min auf. Als geeignet haben sich beispielsweise die verschiedenen Ultradur^{®}-Typen (Hersteller: BASF AG) erwiesen.

Die Sperrschicht (B) weist im allgemeinen einen Anteil von 1 bis 10 % der gesamten Verbundmaterialschichtdicke auf. Bevorzugt sind 1 bis 5 % und besonders bevorzugt sind 2 bis 4 %. Dabei liegen die Gesamtschichtdicken, insbesondere bei Behältern, üblicherweise zwischen 1 und 20 mm, vorzugsweise zwischen 1 und 10 mm, besonders bevorzugt zwischen 1,5 und 8 mm.

Die erfindungsgemäßen Kunststoffverbundmaterialien können verschiedene Schichtstrukturen aufweisen. Als besonders vorteilhaft hat sich ein 5-Schichtaufbau aus einer mittig angeordneten Sperrschicht (B), jeweils einer Innen- und Außenschicht (A), sowie zweier Haftvermittlerschichten (C) zwischen den Schichten (A) und (B) erwiesen.

Dieser 5-Schichtverbund kann durch eine sechste Regeneratschicht ergänzt werden, in welcher das Butzenmaterial aus der Behälterproduktion wiederverwertet werden kann.

In einem solchen 6-Schichtverbund besitzt die Regeneratschicht einen Anteil von 10 bis 60% der Gesamtbehälterverbunddicke, bevorzugt sind 15 bis 50 %, insbesondere 20 bis 45 %.

Weiterhin können an Stelle von reinem PE mit Regenerat vermischtes Polyethylen für die Innen- und Außenschichten eingesetzt werden. In einem solchen Fall enthalten die Innen- und Außenschichten im allgemeinen maximal 10 %, bevorzugt sind 2 bis 4 % Polybutylenterephthalat in den tragenden Innen- und Außenschichten.

Prinzipiell sind auch Mehrschichtverbunde denkbar, bei denen Sperrschichten (B) die Behälterinnen- oder Außenoberflächen bilden.

In diesen Fällen sind die PE-Schicht (A) und die Sperrschicht (B) mit dem Haftvermittler (C) bevorzugt zu einem 3-Schichtverbund vereint. Besonders bevorzugt sind solche 3-Schichtverbundstrukturen mit einer inneren Sperrschicht (B) aus Polybutylenterephthalat.

Um eine dauerhafte und stabile Verbindung zwischen den Schichten (A) und (B) zu erreichen, ist die Anwesenheit von Haftvermittlerschichten (C) zwischen diesen Schichten (A) und (B) vorteilhaft. Vorzugsweise bestehen diese Haftvermittlerschichten (C) im wesentlichen aus polarmodifizierten Ethylenhomo- oder copolymeren. Unter Polarmodifizierung soll dabei jede Einführung von polaren Gruppen in diese Polymere verstanden werden, also beispielsweise durch Copolymerisation in Gegenwart polarer Comonomere, durch Pfropfpolymerisation mit polaren Monomeren oder durch polymeranaloge Umsetzung von Polymeren mit polaren Modifizierungsreagenzien.

Als Haftvermittler eignen sich z.B. polarmodifizierte Polyethylene auf Basis von niederdichtem Polyethylen (PE-LD), linear niederdichtem Polyethylen (PE-LLD) und PE-HD. Als vorteilhaft haben sich beispielsweise Haftvermittlerschichten (C) erwiesen, die im wesentlichen aus Copolymeren von Ethylen und Comonomeren ausgewählt aus der Gruppe der Vinylalkoholester, der Acrylsäure und ihrer Ester, der Methacrylsäure und ihrer Ester, und der Nitrile und Amide der Acryl- und Methacrylsäure bestehen. Als Comonomere sind besonders Vinylacetat, Butylacrylat und Glycidylmethacrylat zu nennen. Weiterhin eignen sich auch Ethylencopolymerisate mit Vinylalkoholestern (z.B. Vinylacetat), mit Acrylsäure oder Metacrylsäure, mit Acrylsäure- oder Metacrylsäureestern (z.B. Butylacrylat, Glycidylmetacrylat) oder Acrylsäure- oder Metacrylsäurenitril sowie Amide der Acryl- bzw. Metacrylsäure. Hierzu sind auch Terpolymere des Ethylens mit zwei polaren Monomeren obiger Auflistung, z.B. Terpolymere des Ethylens mit einem Alkylacrylat (z.B. Butyl- oder Methylacrylat) und Glycidylmetacrylat. Auf Basis PE-LLD und PE-HD eignen sich weiterhin Pfropfpolymerisate mit polaren Monomeren. Als wichtigster Vertreter dieser Pfropfpolymerisate sind mit ethylenisch ungesättigten Carbonsäuren und deren Derivate wie z.B. Maleinsäureanhydrid gepfropfte Polyethylentypen zu nennen. An Stelle des Maleinsäureanhydrids können auch andere Monomere wie z.B. ungesättigte Carbonsäureanhydride, -lactone, -amide, -lactame, -imide verwendet werden. Schließlich lassen sich geeignete Haftvermittler auch durch polymeranaloge Umsetzung polarmodifizierter Polyethylentypen mit mehrwertigen Alkoholen, Oxiranen (z.B. Glycidylalkohol) oder mehrwertigen primären oder sekundären Aminen oder Aminoalkoholen erhalten. Beispiele solcher Haftvermittler werden z.B. in der Patentanmeldung WO 95/09212 beschrieben. Alle hier genannten Haftvermittler lassen sich für eine optimale Wirkung auch miteinander kombinieren. Schließlich können diese Haftvermittler oder Blends verschiedener Haftvermittler mit Polyethylen und/oder Polybutylenterephthalat abgemischt werden. Die Schmelzfließrate MFR (190°C/2,16 kg) der als Haftvermittler allein oder in Kombination eingesetzten polarmodifizierten Polyethylentypen liegt im allgemeinen zwischen 0,05 und 20 g/10 min. Bevorzugt werden solche Materialien mit Schmelzfließraten MFR (190°C/2,16 kg) von 0,1 bis 10 g/10 min, insbesondere von 0,2 bis 5 g/10 min, eingesetzt.

Geeignete kommerziell verfügbare Haftvermittler sind Admer^{®} L 2100 und Admer^{®} GT 5E und Admer^{®} GT 5A (Mitsui Chemical), Lotader^{®} AX 8900, Lotader^{®} 8920 und Orevac^{®} 18501 sowie Orevac^{®} 18334 (Fa. Elf Atochem), Fusabond^{®} B 413 D (DuPont) und Igetabond^{®} E und Igetabond^{®} 2C (Sumitomo).

Jede Haftvermittlerschicht weist üblicherweise einen Anteil von 0,5 bis 10 % an der gesamten Verbundmaterialschichtdicke auf. Bevorzugt sind 1 bis 5 % besonders 1 bis 3 %.

Die Herstellung der erfindungsgemäßen Kunststoffverbundmaterialien erfolgt vorteilhafterweise durch einen Coextrusionsprozeß.

Für die Herstellung der Mehrschichtverbundbehälter eignen sich beispielsweise die von der PA- bzw. EVOH-Coextrusion her bekannten kontinuierlich oder diskontinuierlich, vorzugsweise kontinuierlich, betriebenen Coextrusionsblasformanlagen bzw. -verfahren (vergl. VDI.Gesellschaft Kunststofftechnik (Hrsg.), S. 35, W. Vogl: "Sperrschichtbildung durch Coextrudieren" und S. 59, J. Hagen: "Coextrusion aus der Sicht des Verarbeiters", VDI-Verlag GmbH, Düsseldorf 1986). Wird das bei der Produktion anfallende Butzenmaterial in einer oder mehreren separaten Schichten in den Mehrschichtverbund integriert, so kann das gemahlene Butzenmaterial entweder direkt als Mahlgut oder nach vorhergehender Granulierung als Granulat eingebracht werden. Bei beiden Varianten kann die Verarbeitungsstabilität des Butzenmaterials durch Zugabe geeigneter Stabilisatoren (z.B. phenolische und phosphitische Antioxidanzien) erhöht werden. Auch kann zur Verbesserung der Verträglichkeit des im Mahlgut enthaltenen Polybutylenterephthalats mit der PE-Polymermatrix noch zusätzlich Haftvermittler bzw. Verträglichkeitsvermittler in die Regeneratschicht eingearbeitet werden. Die Regeneratschicht weist im allgemeinen einen Anteil von 0 bis 60 %, vorzugsweise von 0 bis 45 % an der Gesamtbehälterwanddicke auf.

Besonders vorteilhaft ist der Einsatz des erfindungsgemäßen mehrschichtigen Kunststoffverbundmaterials zur Herstellung von Hohlkörpern wie Flaschen, Kanister, Container, Heizöltanks oder Rohrleitungen, insbesondere zur Herstellung von Kunststoffkraftstoffbehältern.

Die besonderen Vorteile und die Wirksamkeit zur Permeabilitätsverminderung der Verwendung von Polybutylenterephthalat als Sperrschichtmaterial in mehrschichtigen Kunststoffverbundmaterialien zeigt das folgende Beispiel.

### Beispiel

Auf einer Coextrusionsblasformanlage KEB 8 der Fa. Krupp-Kautex Maschinenbau GmbH wurden 6-Schichtflaschen mit einem Nennvolumen von 1 l hergestellt. Der Schichtaufbau dieser Flaschen war wie folgt:
- PE-Innenschicht (LUPOLEN 4261 AG) (A)
- innerer Haftvermittler (C)
- Sperrschicht (B)
- äußerer Haftvermittler (C)
- Regeneratschicht (hier LUPOLEN 4261 AG) (A)
- PE-Außenschicht (LUPOLEN 4261 AG) (A)

Der Blasdruck betrug 8 bar. Das Polyethylen wurde mit einer Massetemperatur von 220 bis 240°C extrudiert. Die Dicken der Sperrschichten wurden jeweils durch lichtmikroskopische Aufnahmen bestimmt.

Zur Beurteilung der Permeation wurden die Flaschen zu 50 % ihres Nennvolumens mit Prüflösung nach DIN 51604 FAM-B (enthält 15 % Methanol) gefüllt. Die Flaschen wurden mit einer Gewindekappe aus Messing und einer Viton-Dichtung gasdicht verschlossen. Dann wurden diese Flaschen (von jedem Typ drei Stück) in einem temperierten Raum bei einer Umgebungstemperatur von 40°C über 91 Tage gelagert. Die in Tabelle 1 angegebenen Werte sind die mittleren Permeationswerte nach dieser Lagerzeit. In der letzten Spalte der Tabelle 1 sind die Permeationswerte auf die Oberfläche (0,062 m²) der Flasche und auf die Dicke der Sperrschicht bezogen, um eine genaue Vergleichbarkeit zu ermöglichen. In dem erfindungsgemäßen Versuch B1 wurde das Polybutylenterephthalat Ultradur^{®} B 4500 (Hersteller BASF AG) verwendet.

Das Ergebnis zeigt Tabelle 1:

**Tabelle: 1**

| Versuch | Sperrschicht (B) | Haftvermittler-schichten (C) | Gesamtbehälterwanddicke [µm] | Sperrschichtdicke d [µm] | Permeation Kraftstoff FAM-B | |
|---|---|---|---|---|---|---|
| | | | | | [g] | [g 100 µm/m² [µmd] |
| B 1 | Uitradur^{®}B 4500 | Lotader^{®} AX 8840 | 2267 | 87 | 307 | 5,15 |
| V 1 | Ultramid^{®}C4 FN | Orevac^{®} 18334 | 2220 | 157,6 | 930 | 45,15 |

Der Vergleich zeigt, daß, normiert auf gleiche Sperrschichtdicke, die Sperrschicht aus Polybutylenterephthalat zu einer fast 10-fach geringeren Permeation im Vergleich zu einer Sperrschicht aus Polyamid führt.

## Patentansprüche

1. Mehrschichtiges Kunststoffverbundmaterial, enthaltend mindestens eine Schicht (A), welche, bezogen auf die Gesamtmasse dieser Schicht, zu mindestens 90 Gew.-% aus Ethylenhomo- oder -copolymeren besteht, mindestens eine Sperrschicht (B), welche im wesentlichen aus Polybutylenterephthalat besteht, sowie der Adhäsion zwischen diesen Schichten dienende Haftvermittlerschichten (C) wobei die Haftvermittlerschichten (C) im wesentlichen aus Copolymeren von Ethylen und Comonomeren ausgewählt aus der Gruppe der Vinylalkoholester, der Acrylsäure und ihrer Ester, der Methacrylsäure und ihrer Ester, und der Nitrile und Amide der Acryl- und Methacrylsäure oder im wesentlichen aus einem durch polymeranaloge Umsetzung polarmodifizierter Polyethylentypen mit mehrwertigen : Alkoholen, Oxiranen oder mehrwertigen primären oder sekundären Aminen oder Aminoalkoholen erhaltenen Materials bestehen.

2. Mehrschichtiges Kunststoffverbundmaterial nach Anspruch 1, **dadurch gekennzeichnet, daß** dieses Material einen 5-Schichtaufbau aus einer mittig angeordneten Sperrschicht (B), jeweils einer Innen- und Außenschicht (A), sowie zweier Haftvermittlerschichten (C) zwischen den Schichten (A) und (B) aufweist.

3. Mehrschichtiges Kunststoffverbundmaterial nach Anspruch 1 oder 2, **dadurch gekennzeichnet, daß** das Ethylenhomo- oder -copolymer der Schichten (A) eine Dichte von 0,92 bis 0,96 g/cm³ aufweist.

4. Mehrschichtiges Kunststoffverbundmaterial nach den Ansprüchen 1 bis 3, **dadurch gekennzeichnet, daß** die Sperrschicht (B) ein Polybutylenterephthalat mit einer Schmelzvolumenfließrate MVR (250°C/2,16 kg) von 3 bis 60 ml/10 min enthält.

5. Verfahren zur Herstellung von mehrschichtigen Kunststoffverbundmaterialien gemäß den Ansprüchen 1 bis 4 durch einen Coextrusionsblasformprozeß.

6. Hohlkörper aus einem mehrschichtigen Kunststoffverbundmaterial gemäß den Ansprüchen 1 bis 4.

7. Kunststoffkraftstoffbehälter aus einem mehrschichtigen Kunststoffverbundmaterial gemäß den Ansprüchen 1 bis 4.

## Claims

1. A multilayer composite plastics material comprising at least one layer (A) which, based on the total mass of this layer, consists of at least 90 wt% of ethylene homopolymers or copolymers, at least one barrier layer (B) which substantially consists of polybutylene terephthalate, as well as layers of adhesion promoter (C) intended to provide adhesion between these layers, the layers of adhesion promoter (C) substantially consisting of copolymers of ethylene and comonomers selected from the group of vinyl alcohol esters, acrylic acid and esters thereof, methacrylic acid and esters thereof, and nitriles and amides of acrylic and methacrylic acid, or the layers of adhesion promoter (C) substantially consisting of a material resulting from polymer-like reaction of polar-modified types of polyethylene with polyhydric alcohols, oxiranes or polyvalent primary or secondary amines or amino alcohols.

2. The multilayer composite plastics material according to claim 1, **characterized in that** this material has a 5-layer structure composed of a centrally arranged barrier layer (B), an inner and an outer layer (A), as well as two layers of adhesion promoter (C) arranged between the layers (A) and (B).

3. The multilayer composite plastics material according to claim 1 or 2, **characterized in that** the ethylene homopolymer or copolymer of the layers (A) has a density of from 0.92 to 0.96 g/cm³.

4. The multilayer composite plastics material according to any one of claims 1 to 3, **characterized in that** the barrier layer (B) comprises a polybutylene terephthalate having a melt volume flow rate MVR (250°C/2.16 kg) of from 3 to 60 ml/10 min.

5. A process for the preparation of multilayer composite plastics materials according to any one of claims 1 to 4 by a coextrusion blow molding process.

6. A hollow body comprising a multilayer composite plastics material according to any one of claims 1 to 4.

7. A plastic fuel can comprising a multilayer composite plastics material according to any one of claims 1 to 4.

## Revendications

1. Matériau composite en matière plastique multi-couches, comprenant au moins une couche (A) qui est constituée, par rapport à la masse totale de cette couche, d'au moins 90% en poids d'homopolymère d'éthylène ou de copolymère d'éthylène, au moins une couche de barrage (B) qui est constituée essentiellement de polybutylènetéréphthalate, ainsi que des couches d'agent adhésif (C) pour l'adhésion entre ces couches, les couches d'agent adhésif (C) étant constituées de matériau contenant essentiellement des copolymères d'éthylène et des comonomères choisis dans le groupe des esters d'alcool vinylique, des acides acryliques et leurs esters, des acides méthacryliques et leurs esters, et des nitriles et amides des acides acryliques et méthacryliques, ou de matériau résultant essentiellement de types de polyéthylène modifié polairement par réaction de type polymérique avec des alcools et des oxiranes polyvalents ou des amines primaires ou secondaires polyvalents ou des aminoalcools.

2. Matériau composite en matière plastique multi-couches selon la revendication 1, **caractérisé en ce que** ce matériau présente une construction à 5 couches constituée d'une couche de barrage (B) disposée centralement, d'une couche respective (A) intérieure et extérieure ainsi que de deux couches d'agent adhésif (C) entre les couches (A) et (B).

3. Matériau composite en matière plastique multi-couches selon la revendication 1 ou 2, **caractérisé en ce que** l'homopolymère ou le copolymère d'éthylène de la couche (A) présente une densité de 0,92 à 0,96 g/cm³.

4. Matériau composite en matière plastique multi-couches selon les revendications 1 à 3, **caractérisé en ce que** la couche de barrage (A) contient un polybutylènetéréphthalate avec un indice de fluidité a chaud en volume MVR (250°C/2.16 kg) de 3 à 60 ml/10 min.

5. Procédé de fabrication d'un matériau composite en matière plastique multi-couches selon les revendications 1 à 4 par un traitement de coextrusion en moulage par soufflage.

6. Corps creux en matériau composite en matière plastique multi-couches selon les revendications 1 à 4.

7. Réservoir pour carburant en matière plastique en matériau composite en matière plastique multi-couches selon les revendications 1 à 4.
